# EUROPÄISCHE PATENTSCHRIFT

(11) **EP 0 785 858 B1**
(45) Veröffentlichungstag und Bekanntmachung des Hinweises auf die Patenterteilung: **12.12.2001**
(21) Anmeldenummer: 95935437.4
(22) Anmeldetag: 05.10.1995
(51) Int. Cl.: B29C 55/20, B29C 55/16

(54) **VORRICHTUNG ZUR HERSTELLUNG VON LÄNGS- UND/ODER QUERGERECKTEN, INSBESONDERE SIMULTAN BIAXIAL GERECKTEN FOLIENBAHNEN**
DEVICE FOR PRODUCING LONGITUDINALLY AND/OR TRANSVERSELY DRAWN-OUT FOIL WEBS, IN PARTICULAR FOIL WEBS SIMULTANEOUSLY DRAWN-OUT ALONG TWO AXES
DISPOSITIF DE FABRICATION DE BANDES DE FEUILLES ETIREES EN LONGUEUR ET/OU EN LARGEUR, NOTAMMENT ETIREES EN MEME TEMPS LE LONG DE DEUX AXES

(30) Priorität: 13.10.1994 DE 4436676
(43) Veröffentlichungstag der Anmeldung: 30.07.1997
(73) Patentinhaber: Brückner Maschinenbau GmbH, 83313 Siegsdorf (DE)
(72) Erfinder: STEFFL, Manfred, D-83244 Graussau (DE)
(74) Vertreter: Flach, Dieter Rolf Paul, Dipl.-Phys.
(86) Internationale Anmeldenummer: EP9503940
(87) Internationale Veröffentlichungsnummer: WO9611787

(56) Entgegenhaltungen:
- DE-A- 3 131 594
- FR-A- 2 686 041
- US-A- 3 500 515
- PATENT ABSTRACTS OF JAPAN vol. 009 no. 256 (M-421) ,15.Oktober 1985 & JP,A,60 106755 (TORAY KK) 12.Juni 1985,
- PATENT ABSTRACTS OF JAPAN vol. 012 no. 113 (M-683) ,9.April 1988 & JP,A,62 240210 (TOSHIBA MACH CO LTD) 21.Oktober 1987,
- PATENT ABSTRACTS OF JAPAN vol. 010 no. 315 (M-529) ,25.Oktober 1986 & JP,A,61 124462 (MITSUBISHI HEAVY IND LTD) 12.Juni 1986,

## Beschreibung

Die Erfindung betrifft eine Vorrichtung zur Herstellung von längs- und/oder quergereckten, insbesondere simultan biaxial gereckten Folienbahnen nach dem Oberbegriff des Anspruches 1.

Bei derartigen Vorrichtungen ist es bekannt, daß längs einer Schienenanordnung Kluppen verfahren werden, mit denen der Rand der zu reckenden Folienbahn ergriffen, dabei fortbewegt und gereckt werden kann. Es sind Längs- und Querreckanlagen sowie biaxiale Reckanlagen zum simultanen biaxialen Recken von Folienbahnen bekannt. Insbesondere bei simultan biaxialen Reckanlagen werden die Kluppen oder Spannmittel in der Regel durch Lenker untereinander verbunden, die in zickzackförmiger Anordnung längs zweier Führungsbahnen in der Streck- und Fixierzone geführt sind. Die beiden Führungsbahnen sind in Längsrichtung in der Streckzone mit zunehmend geringer werdendem Abstand und in der Fixierzone mit zunehmend größer werdendem Abstand zueinander verlegt. Dadurch ändert sich der Abstand zweier Kluppen bzw. Kluppenwagen, wodurch die simultane biaxiale Reckung bewerkstelligt werden kann.

Eine nach dem Stand der Technik bekannte Kluppe, die längs einer Schienenanordnung verfahren werden kann, ist beispielsweise aus der DE 39 28 454 A1 bekannt geworden.

Die Vorrichtung umfaßt eine Schiene mit rechteckförmigem Querschnitt quer zu deren Längsrichtung. Die Kluppe ist mit oberen und unteren vertikalen und mit links und rechts der Schiene liegenden horizontalen und in Längsrichtung versetzt liegenden Laufrollen ausgestattet, worüber die Kluppe längs der vier Laufflächen an der Schiene längsverfahrbar ist.

Die Kluppe gliedert sich in den die Laufrollen umfassenden Kluppenwagen sowie die zugehörigen Spannmittel zum Ergreifen und Festhalten des Randes einer zu reckenden Folienbahn, wozu am Kluppenwagen in etwa in Höhe der Führungsschiene ein Kluppentisch vorgesehen ist, auf welcher in der Ebene der Folienbahn verlaufend der Rand der Folienbahn ergriffen und durch einen in der Vorveröffentlichung nicht näher gezeigten Kluppenhebel gespannt und festgehalten wird.

Obgleich dies in der DE 39 28 454 nicht näher dargestellt ist, kann noch eine Abschirmwand vorgesehen sein, die längs der Schienenanordnung verläuft und den freien Bereich unterhalb des Kluppenwagens bis unterhalb des Kluppentisches abschirmt.

Insoweit grundsätzlich vergleichbare Kluppen mit Kluppenwagen und entsprechenden Spannmitteln sind beispielsweise auch aus der DE 28 41 510 B1 oder der DE 20 58 575 A1 bekannt geworden.

Schließlich ist auch gemäß dem Patent Abstracts of Japan vol. 009 no. 256 (M-421), 15. Oktober 1985 & JP,A,60 106755 (TORAY KK) 12. Juni 1985 eine gattungsgleiche Vorrichtung bekannt, bei der eine Abschirmung zwischen den Spannmitteln für die Folie und den Führungsmitteln der Kluppe dadurch erreicht wird, dass zwischen beiden von unten und von oben je eine symmetrisch angeordnete Abschirmwand ragt. Diese Abschirmwände sind Teil einer Kapselung, die die Kluppenwagen umschließt. Mit Hilfe eines innerhalb der Kapselung erzeugten Unterdrucks wird bewirkt, dass kein Staub aus der Kapselung auf die Folienseite gelangt.

Aufgabe der vorliegenden Erfindung ist es eine gegenüber dem Stand der Technik verbesserte Vorrichtung zum Längs- und/oder Querrecken oder zum simultanen biaxialen Recken von Folienbahnen zu schaffen, die insbesondere bei einem Folienriß weniger anfällig ist, und bei der zu reckenden die Folienbahn vor Verschmutzung besser geschützt ist.

Die Aufgabe wird entsprechend den im Anspruch 1 angegebenen Merkmalen gelöst. Vorteilhafte Ausgestaltungen der Erfindung sind in den Unteransprüchen angegeben.

Es ist bekannt, daß die Laufwagen, die Laufrollen und die Führungsschiene stets mit entsprechenden Schmiermitteln, d.h. Ölen oder Fetten geschmiert werden müssen. Es hat sich nunmehr gezeigt, daß derartige Öl- und Schmiermittelreste zumindest mit kleiner Partikel- und Tröpfchengröße in Richtung der Folienbahn geschleudert werden, wodurch sich die Qualität der Folienbahn vermindert.

Umgekehrt ist aber auch bekannt, daß es bei der Herstellung und beim Recken derartiger Folienbahnen stets immer wieder zu einem Folienbahnriß kommen kann. Folienreste und -schnitzel werden dann durch die über die Kluppe in die Folienbahn eingeleiteten Reckkräfte in Richtung der Kluppenwagen beschleunigt und können bis auf die Schiene und damit die Laufbahnen selbst gelangen. Mit anderen Worten können sich die Folienreste im Kluppenwagen in den dort vorgesehenen Laufrollen verheddern, wodurch im schlimmsten Fall sogar ein Stillstand der Anlage erforderlich ist.

Diese Nachteile können erfindungsgemäß mit vergleichsweise einfachen Mitteln übewunden werden.

Dazu weist die Kluppe eine neue Konstruktion auf, die sich dadurch auszeichnet, daß die eigentlichen, den Rand der Folienbahn haltenden Spannmittel mit dem längs der Schiene verfahrbaren Kluppenwagen über eine obenliegende Brückenkonstruktion verbunden sind. Dadurch wird zwischen den Spannmitteln und dem Kluppenwagen ein unterhalb der Brücke liegender Abstandsraum gebildet, in welchem eine untere Abschirmwand angeordnet werden kann. Der obere Rand der Abschirmwand kann dabei deutlich höher als die Spannebene, d.h. die Lage der Folienbahn enden. Er kann damit auch deutlich höher liegen, als die Laufflächen an der Schiene.

Dadurch ist eine gegenseitige Abschirmung in Höhe der Schienenanordnung sowie in Höhe der Folienbahnen gewährleistet, die verhindert, daß Schmiermittel oder Schmiermittelreste in Richtung Folienbahn geschleudert werden oder daß umgekehrt bei einem Riß der Folienbahn Folienbahnbestandteile und -schnitzel in den Bereich der Laufrollen und der Schiene gelangen können. Denn diese Folienreste können bei der erfindungsgemäßen Konstruktion nur bis zur Abschirmwand gelangen. Auf diese Weise wird erreicht, daß die Kluppen gegen einen Folieneinzug geschützt sind und daß dabei wiederum vor allem die Laufrollen und die Laufbahnen sowie die Motoren gegen ein Eindringen der Folie geschützt sind.

Insoweit unterscheidet sich die vorliegende Erfindung zudem auch von dem vorveröffentlichten JP,A,60 106755, da diese Vorveröffentlichung mit vergleichsweise hohem Aufwand unter Erzeugung eines Unterdrucks nur gewährleisten kann, dass keine Verunreinigung aus dem Transportsystem nach außen auf die Folie dringen. Gemäß der vorliegenden Erfindung wird aber darüber hinaus noch das viel wesentlichtere und wichtigere Ziel mit erreicht, dass vor allem bei einem Folienriss z.B. keine Folienreste in das Transportsystem eindringen können.

Eine weitere Verbesserung kann grundsätzlich auch noch dadurch erzielt werden, daß noch eine obere Abschirmwand vorgesehen ist, die von oben her folienbahnseitig die Spannmittel der Kluppe zur Folienbahnseite hin abdeckt. Mit anderen Worten endet die obere Abdeckwand in entsprechend ausreichendem Abstand oberhalb des Kluppentisches bzw. der Folienbahn. Dadurch ergibt sich eine meanderförmige, d.h. in Seitenansicht parallel zur Folienbahn eine überlappende Abdeckung, wodurch die Raumtrennung zwischen Folienbahn und Kluppenwagenanorndung nochmals verbessert wird. Schmiermittelreste können damit selbst in ungünstigen Situationen nicht mehr in Richtung zur Folienbahn geschleudert werden, wie umgekehrt aber auch im Falle eines Folienbahnenrisses Folienbestandteile völlig von der Laufschiene und der Kluppenwagenanordnung abgeschirmt sind und nicht in diesen Bereich gelangen können.

Die erfindungsgemäß beschriebene Abschirmung weist besondere Vorteile bei Reckanlagen zum simultanen biaxialen Recken von Folien auf. Denn in der Reckzone wird hier der Kluppenabstand zwischen zwei Kluppen zunehmend größer, mit der Folge, daß durch den größer werdenden Freiraum zwischen zwei Kluppenwägen ohne die erfindungsgemäße Abschirmung die Gefahr zunimmt, daß durch die Rotation der Laufrollen Öl- oder Schmiermittelreste in Richtung Folienbahn geschleudert werden und diese kontaminieren können, und daß umgekehrt bei einem Folienbahnriß Folienreste in den Bereich der Schiene und damit der Kluppenwägen sowie deren Laufräder gelangen können.

Weitere Vorteile, Einzelheiten und Merkmale der Erfindung werden nachfolgend anhand eines Ausfühungsbeispieles unter Bezugnahme auf eine beigefügte Zeichnung näher erläutert.

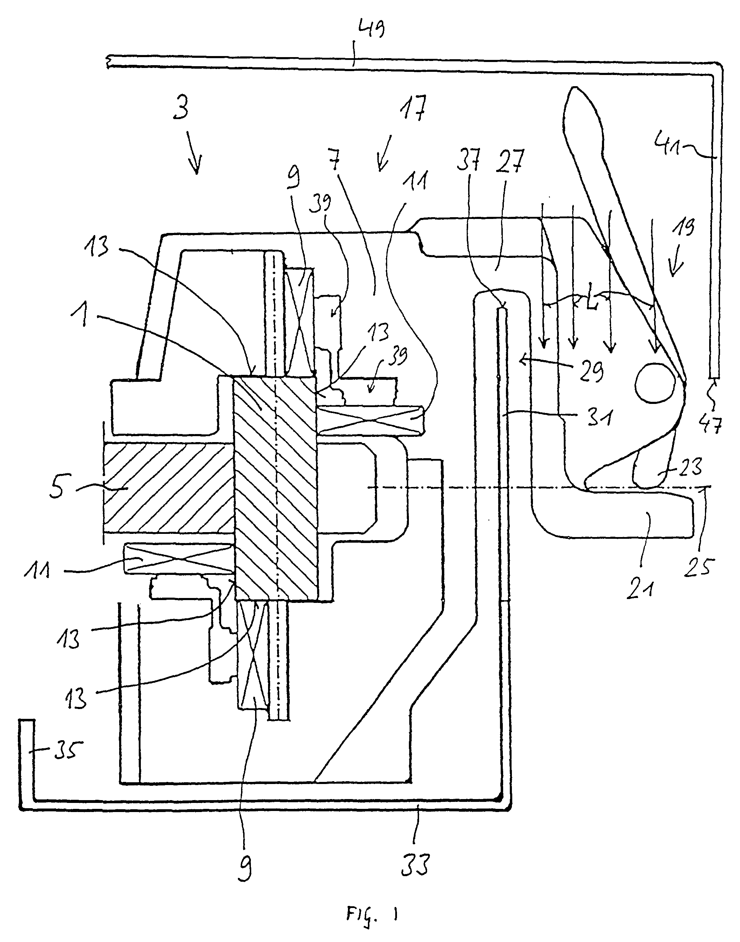

In der Zeichnung ist eine nachfolgend zum Teil auch als Schienenanordnung bezeichnete Schiene 1 im Querschnitt gezeigt, die quer zur Zeichenebene verläuft und längs der die in der Figur in Querschnittdarstellung wiedergegebene Kluppe 3 verfahrbar ist.

Die Schiene 1 weist im gezeigten Ausführungsbeispiel eine Rechteckform auf und ist über einen nach links verlaufenden Träger 5 gehalten.

Der Kluppenwagen selbst weist eine U- bis C-förmige Grundstruktur, d.h. im wesentlichen einen U-förmigen Rahmen 7, auf, an welchem mehrere in Längsrichtung des Kluppenwagens versetzt liegende vertikale und horizontale Laufrollen 9 bzw. 11 auf den durch die oberen und unteren bzw. linken wie rechten Seiten der Schiene 1 gebildeten Laufbahnen 13 abrollen. Die vertikalen Laufrollen 9 sind mit ihrer Achse in Horizontalrichtung verlaufenden Vertikallagern und die horizontalen Laufrollen 13 mit ihrer Achse in Vertikalrichtung verlaufenden Horizontallagern versehen.

Anstelle der erwähnten Laufrollen können unter Umständen teilweise auch andere Führungsmittel, beispielsweise unter Verwendung einer Gleitlagerung eingesetzt werden.

Aus der zeichnerischen Darstellung ist ersichtlich, daß sich die Kluppe 3 in einen Kluppenwagen 17 (der im wesentlichen den U-förmigen Tragrahmen 7 mit den erwähnten vertikalen und horizontalen Laufrollen 9, 11 etc. umfaßt) und die Spannmittel 19 gliedert, die im gezeigten Ausführungsbeispiel einen Kluppentisch 21 und einen Kluppenhebel 23 umfaßt, an dessem unteren Ende die in der Folienbahnebene 25 verlaufende Folienbahn an ihrem seitlichen Rand ergriffen und zwischen dem unteren Ende des Kluppenhebels 23 und dem Kluppentisch 21 eingespannt gehalten werden kann. Wie aus der zeichnerischen Darstellung ersichtlich ist, liegt die obere Auflagefläche des Kluppentisches 21 und damit die Folienbahnebene 25 zumindest in etwa in mittlerer Höhe der Schiene 1. Dadurch ergibt sich eine vergleichsweise verkippfreie Abstützung des Kluppenwagens an der Schiene 1. Davon abweichend sind aber auch andere Konstruktionen möglich.

Die Verbindung zwischen Spannmittel 19 und Kluppenwagen 17 erfolgt über eine obenliegende Brücke 27 unter Ausbildung eines darunter befindlichen Abstandsraumes 29 zwischen folienbahnseitig liegenden Spannmitteln 19 und dazu gegenüberliegendem Kluppenwagen 17. In diesem Abstandsraum 29 verläuft eine Abschirmung bzw. Abschirmwand 31. Am unteren Ende der im wesentlichen vertikal verlaufenden Abschirmwand 31 geht diese unterhalb des Kluppenwagens in eine Bodenabschirmwand 33 über. Im gezeigten Ausführungsbeispiel ist die Abschirmung 31 im Querschnitt zumindest ansatzweise U-förmig gestaltet und weist auf der zur Folienbahn abgewandt liegenden Seite noch einen sich über eine geringe Teilhöhe erstreckenden Abschirmrand 35 auf. Diese so gebildete Abschirmwand oder -wanne verläuft parallel zu der in ihrem inneren Bereich verlaufenden Schiene 1.

Die Ausführungsform ist derart, daß die Oberkante 37 der Abschirmwand 31 oberhalb der Folienbahn bzw. der Folienbahnebene 25 liegt. Gleichzeitig liegt die Oberkante 37 auch oberhalb der auf der Schiene 1 ausgebildeten horizontalen bzw. vertikalen Laufbahnen 13. Im gezeigten Ausführungsbeispiel ist sogar gewährleistet, daß nicht nur die Horizontallager der horizontalen Laufrollen 11, sondern vor allem auch die Vertikallager der vertikalen oberen Laufrollen 9 noch unterhalb der Oberkante 37 der Abschirmwand 31 zu liegen kommen. Lediglich in einer geringen Teilhöhe (die kleiner ist als der Radius der oberen Laufrollen) überragen die oberen vertikalen Laufrollen 9 in Seitenansicht noch die Oberkante 37 der Abschirmung 31. Aber auch bei dem gezeigten Ausführungsbeispiel kann die Brücke 27 zwischen Spannmitteln 19 und Kluppenwagen 17 so gestaltet sein, daß die Oberkante 37 relativ zu der maximalen oberen Erstreckungshöhe der vertikalen Laufrollen 9 zu liegen kommt.

Da die erwähnten Lauf- oder Rollenbahnen 13 und die Folienbahn deutlich unter der Oberkante 37 der vertikalen Abschirmung 31 liegen, ergibt sich eine optimale Öl- und Schmiermittelabschirmung gegenüber der Folienbahn. Diese Wirkung wird dadurch verstärkt, daß alle horizontalen und vertikalen Lager unterhalb der Oberkante 37 der Abschirmwand 31 liegen.

Wenn im gezeigten Ausführungsbeispiel die oberen vertikalen Laufrollen 9 noch zumindest in einem geringen Bereich oberhalb der Oberkante 37 der unteren Abschirmwand 31 liegen, so können hier auch noch sogenannte "integrierte Kotflügel" 39 vorgesehen sein, die die vertikalen Laufrollen 9 sowie deren Lager in Richtung zur Folienbahnseite hin zusätzlich noch abdecken.

Umgekehrt wird aber auch ein Schutz gegen das Eindringen der Folie bzw. von Folienbahnresten bei einem Folienbahnriß dadurch erreicht, daß die Einspannstelle der Spannmittel 19 und damit die Folienbahnebene 25 deutlich unterhalb der Oberkante 37 der unteren Abschirmwand 31 liegt. Bei einem Folienbahnriß können die Folienbahnreste frei nach unten fallen, ohne daß sie in den Bereich des Kluppenwagens bzw. der Laufflächen gelangen können. Der freie Fall nach unten wird allein durch die Gravitationskräfte bewirkt. Bei Bedarf könnte hier auch noch eine Unterstützung mittels von oben nach unten gerichteter Luftströmung vorgesehen sein (Gebläse etc.), was in der Zeichnung im einzelnen nicht näher dargestellt ist.

Die erwähnte Abschirmung kann noch dadurch weiter verbessert werden, daß, wie in der Zeichnung dargestellt ist, auch eine obere Abschirmung oder Abschirmwand 41 vorgesehen ist, die im Bereich oberhalb der Schiene 1 parallel dazu, d.h. dieser folgend und oberhalb der darauf längs verfahrbaren Kluppenwagen 17 angeordnet ist und folienbahnseitig mit zumindest vertikaler Komponente auf die Folienbahn zu verläuft. Ihre Unterkante 47 endet in ausreichendem Abstand oberhalb der Folienbahnebene 25 und damit in der Querdarstellung gemäß der beigefügten Zeichnung auf der Seite der Folienbahn liegend seitlich neben den Spannmitteln 19, d.h. insbesondere dem Kluppenhebel 23 und dessen Lagerung.

Durch diese Anordnung ist gewährleistet, daß die Unterkante 47 der oberen Abschirmung 41 deutlich unterhalb der Oberkante 37 der unteren Abschirmung 31 liegt. Es ergibt sich dadurch in Seitenansicht, d.h. bezogen auf die Folienbahnebene 25, eine überlappende Abschirmung mit einem meanderförmig verlaufenden Verbindungsweg zwischen Folienraum und Laufwagenanordnung. Die gegenseitige Abschirmungswirkung der Folienbahn gegenüber Öl- und Schmiermittel sowie umgekehrt der Schutz der Laufwagenanordnung, der Laufrollen und der Laufflächen gegenüber Folienbahnresten und -schnitzel wird dadurch noch weiter erhöht und verbessert. Im gezeigten Ausführungsbeispiel geht die zumindest mit einer Vertikalkomponente verlaufende obere Abschirmwand 41 oberhalb des Kluppenwagens und der Spannmittel 19 in eine horizontal von der Folienbahn wegverlaufende Deckenwandung 49 über.

Wie in der Zeichnung anhand der Pfeile L dargestellt ist, könnte durch geeignete Weise (beispielsweise durch Gebläse etc.) noch ein von oben nach unten gerichteter Luftstrom zwischen der oberen und unteren Abdeckwand 41, 31 nach unten geleitet werden. Im Falle eines Folienbahnrisses wird dadurch gewährleistet, daß die Folienbahnbestandteile und -schnitzel noch leichter und besser nach unten mit dem Luftstrom mitgenommen werden, wodurch die Abschirmwirkung gegenüber den Kluppen und Kluppenwagen noch weiter verbessert wird.

Die Vorrichtung zur Herstellung von längs- und/oder quergereckten, insbesondere simultan biaxial gereckten Folienbahnen, zeichnet sich also gemäß des in der beigefügten Figur wiedergegebenen Ausführungsbeispieles durch die folgenden Merkmale aus:
- mit einer Schienenanordnung 1,
- längs der Schienenanordnung 1 sind Kluppen 3 mittels Kluppenwagen 17 verfahrbar,
- der jeweilige Kluppenwagen ist mittels unterschiedlich ausgerichteten und vorzugsweise aus Laufrollen bestehenden Führungsmittel 9, 11 längs der an der Schienenanordnung 1 ausgebildeten Laufbahnen 13 verfahrbar,
- die Kluppenwagen 17 und die Schienenanordnung 1 sind so ausgebildet, daß die Führungsmittel 9, 11 der Kluppenwagen 17 die Schienenanordnung 1 zumindest teilweise über- und/oder umgreifen,
- die Spannmittel 19 sind mit dem sie tragenden Kluppenwagen 17 in Queransicht über eine obenliegende Brücke 27 unter Ausbildung eines unter der Brücke 27 gebildeten Abstandsraumes 29 gehalten und verankert,
- in diesen Abstandsraum 29 ragt eine von unten nach oben verlaufende und zur Schienenanordnung versetzt liegende untere Abschirmwand 41,
- die Oberkante 37 der unteren Abschirmwand 31 endet im Abstand oberhalb der Folienbahnebene 27, und
- die Führungsmittel 9, 11 des Kluppenwagens 17 liegen auf der zu den Spannmitteln 19 gegenüberliegenden Seite der Abschirmwand 31 bzw. der durch die Abschirmwand 31 gebildeten Schirmungsebene.

## Patentansprüche

1. Vorrichtung zur Herstellung von längs- und/oder quergereckten, insbesondere simultan biaxial gereckten Folienbahnen, mit den folgenden Merkmalen
- mit einer Schienenanordnung (1),
- längs der Schienenanordnung (1) sind Kluppen (3) mit Spannmitteln (19) mittels Kluppenwägen (17) verfahrbar,
- der jeweilige Kluppenwagen ist mittels unterschiedlich ausgerichteten und vorzugsweise aus Laufrollen bestehenden Führungsmitteln (9, 11) längs der an der Schienenanordnung (1) ausgebildeten Laufbahnen (13) verfahrbar,
**gekennzeichnet durch** die folgenden weiteren Merkmale
- die Spannmittel (19) sind mit dem sie tragenden Kluppenwagen (17) in Queransicht über eine obenliegende Brücke (27) unter Ausbildung eines unter der Brücke (27) gebildeten Abstandsraumes (29) gehalten und verankert,
- in diesen Abstandsraum (29) ragt eine von unten nach oben verlaufende untere Abschirmwand (31),
- die Oberkante (37) der unteren Abschirmwand (31) endet im Abstand oberhalb der Folienbahnebene (25), und
- die Führungsmittel (9, 11) des Kluppenwagens (17) liegen auf der zu den Spannmitteln (19) gegenüberliegenden Seite der Abschirmwand (31) bzw. der **durch** die Abschirmwand (31) gebildeten Schirmungsebene.

2. Vorrichtung nach Anspruch 1, **dadurch gekennzeichnet, daß** die an der Schienenanordnung (1) ausgebildeten Laufbahnen (13) unterhalb der Oberkante (37) der unteren Abschirmwand (31) liegen.

3. Vorrichtung nach Anspruch 1 oder 2, **dadurch gekennzeichnet, daß** die horizontalen Führungsmittel vorzugsweise in Form von horizontalen Laufrollen (11) unterhalb der Oberkante (37) der unteren Abschirmwand (31) liegen.

4. Vorrichtung nach einem der Ansprüche 1 bis 3, **dadurch gekennzeichnet, daß** die Vertikallager der als Führungsmittel dienenden vertikalen Laufrollen (9) unterhalb der Oberkante (37) der unteren Abschirmwand (31) liegen.

5. Vorrichtung nach Anspruch 4, **dadurch gekennzeichnet, daß** zumindest die obenliegenden vertikalen Laufrollen (9) mit Kotflügeln (39) in Richtung zur Folienbahn hin abgeschirmt sind.

6. Vorrichtung nach einem der Ansprüche 1 bis 5, **dadurch gekennzeichnet, daß** eine weitere obere Abschirmung bzw. obere Abschirmwand (41) vorgesehen ist, die von oben auf die Folienbahnebene (25) zulaufend die Spannmittel (19) und die Kluppenwägen (17) überdeckt und die mit ihrer Unterkante (47) oberhalb der Folienbahnebene (25) endet.

7. Vorrichtung nach Anspruch 6, **dadurch gekennzeichnet, daß** sich die untere und die obere Abschirmwand (31, 41) in Seitenansicht parallel zur Folienbahnebene (25) überlappen.

8. Vorrichtung nach Anspruch 6 oder 7, **dadurch gekennzeichnet, daß** die Unterkante (47) der oberen Abschirmwand (41) unterhalb der obenliegenden Laufbahn (13) der Schienenanordnung (1) endet.

9. Vorrichtung nach einem der Ansprüche 6 bis 8, **dadurch gekennzeichnet, daß** die Überlappungshöhe der unteren und oberen Abschirmwand (31, 41) zumindest 20% der Schienenhöhe (13) beträgt.

10. Vorichtung nach einem der Ansprüche 1 bis 9, **dadurch gekennzeichnet, daß** folienbahnseitig benachbart zur unteren Abchirmwand (31), vorzugsweise in Draufsicht zwischen der unteren und der oberen Abschirmwand (31, 41) hindurch verlaufend, eine nach unten gerichtete Luftströmung (L) erzeugbar ist.

## Claims

1. Apparatus for producing longitudinally and/or transversely drawn-out film webs, in particular film webs simultaneously drawn out along two axes, having the following features
- with a rail arrangement (1),
- along the rail arrangement (1), nippers (3) with clamping means (19) can be made to travel by means of nipper carriages (17),
- the respective nipper carriage can be made to travel by means of guide means (9, 11), which are differently directed and preferably comprise running rollers, along the running tracks (13) formed on the rail arrangement (1),
**characterized by** the following further features
- the clamping means (19) are held and anchored with the nipper carriage (17) carrying them by means of an overlying bridge (27), forming a spatial distance (29) underneath the bridge (27), in transverse view,
- into this spatial distance (29) there protrudes a lower shielding wall (31), running from bottom to top,
- the upper edge (37) of the lower shielding wall (31) ends at a distance above the film web plane (25) [sic], and
- the guide means (9, 11) of the nipper carriage (17) lie on the side of the shielding wall (31) opposite that of the clamping means (19), or of the shielding plane formed by the shielding wall (31).

2. Apparatus according to claim 1, **characterized in that** the running tracks (13) formed on the rail arrangement (1) lie below the upper edge (37) of the lower shielding wall (31).

3. Apparatus according to claim 1 or 2, **characterized in that** the horizontal guide means, preferably in the form of horizontal running rollers (11), lie below the upper edge (37) of the lower shielding wall (31).

4. Apparatus according to one of claims 1 to 3, **characterized in that** the vertical bearings of the vertical running rollers (9), serving as guide means, lie below the upper edge (37) of the lower shielding wall (31).

5. Apparatus according to claim 4, **characterized in that** at least the upper-lying vertical running rollers (9) are shielded by mudguards (39) in the direction toward the film web.

6. Apparatus according to one of claims 1 to 5, **characterized in that** there is provided a further upper shielding, or upper shielding wall (41), which running from above toward the film web plane (25) covers the clamping means (19) and the nipper carriages (17) and ends with its lower edge (47) above the film web plane (25).

7. Apparatus according to claim 6, **characterized in that** the lower and the upper shielding walls (31, 41) overlap in side view parallel to the film web plane (25).

8. Apparatus according to claim 6 or 7, **characterized in that** the lower edge (47) of the upper shielding wall (41) ends below the upper-lying running track (13) of the rail arrangement (1).

9. Apparatus according to one of claims 6 to 8, **characterized in that** the height of overlap of the lower and upper shielding walls (31, 41) is at least 20% of the rail height (13).

10. Apparatus according to one of claims 1 to 9, **characterized in that**, on the film web side, a downwardly directed airflow (L) can be generated alongside the lower shielding wall (31), preferably running in plan view between the lower and the upper shielding walls (31, 41).

## Revendications

1. Dispositif de fabrication de bandes de feuilles étirées en longueur et/en largeur, en particulier étirées simultanément biaxialement, présentant les caractéristiques suivantes :
- il comprend un agencement de rail (1),
- des pinces (3) avec des moyens de serrage (19) sont déplaçables au moyen de chariots à pinces (17) le long de l'agencement de rail (1),
- le chariot à pince respectif est déplaçable le long de la bande de roulement (13) réalisée sur l'agencement de rail (1), par des moyens de guidage (9, 11) sous différentes orientations et constitués de préférence par des galets de roulement,
**caractérisé par** les autres caractéristiques suivantes :
- les moyens de serrage (19) sont maintenus et ancrés avec le chariot à pince (17) qui les porte en vue transversale via un pont (27) supérieur en formant un espace (29) formé sous le pont (27),
- dans cet espace (29) fait saillie une paroi de protection inférieure (31) s'étendant depuis le bas vers le haut,
- le bord supérieur (37) de la paroi de protection inférieure (31) se termine à distance au-dessus du plan de la bande de feuille (25), et
- les moyens de guidage (9, 11) du chariot à pince (17) sont situés sur le côté opposé aux moyens de serrage (19), soit de la paroi de protection (31), soit du plan de protection formé par la paroi de protection (31).

2. Dispositif selon la revendication 1, **caractérisé en ce que** les bandes de roulement (13) réalisés sur l'agencement de rail (1) se trouvent en dessous du bord supérieur (37) de la paroi de protection inférieure (31).

3. Dispositif selon l'une ou l'autre des revendications 1 et 2, **caractérisé en ce que** les moyens de guidage horizontaux, de préférence sous forme de galets de roulement (11) horizontaux, sont situés en dessous du bord supérieur (37) de la paroi de protection inférieure (31).

4. Dispositif selon l'une quelconque des revendications 1 à 3, **caractérisé en ce que** les paliers verticaux des galets de roulement (9) verticaux servant de moyens de guidage sont situés en dessous du bord supérieur (37) de la paroi de protection inférieure (31).

5. Dispositif selon la revendication 4, **caractérisé en ce qu'**au moins les galets de roulement (9) verticaux supérieurs sont protégés par des ailes (39) en direction de la paroi de protection inférieure (31).

6. Dispositif selon l'une quelconque des revendications 1 à 5, **caractérisé en ce qu'**il est prévu une autre protection supérieure ou paroi de protection supérieure (41) qui recouvre les moyens de serrage (19) et les chariots à pinces (17) en convergeant depuis le haut vers le plan de bande de feuille (25) et se terminant avec son bord inférieur (47) au-dessus du plan de bande de feuille (25).

7. Dispositif selon la revendication 6, **caractérisé en ce que**, en vue latérale, les parois de protection inférieure et supérieure (31, 41) se chevauchent parallèlement au plan de bande de feuille (25).

8. Dispositif selon l'une ou l'autre des revendications 6 et 7, **caractérisé en ce que** le bord inférieur (47) de la paroi de protection supérieure (41) se termine en dessous de la bande de roulement (13) supérieure de l'agencement de rail (1).

9. Dispositif selon l'une quelconque des revendications 6 à 8, **caractérisé en ce que** la hauteur de chevauchement des parois de protection inférieure et supérieure (31, 41) s'élève à au moins 20 % de la hauteur de rail (13).

10. Dispositif selon l'une quelconque des revendications 1 à 9, **caractérisé en ce qu'**il est possible de produire un courant d'air (L) orienté vers le bas, du côté de la bande de feuille, au voisinage de la paroi de protection inférieure (31), s'étendant en vue en plan de préférence entre les parois de protection inférieure et supérieure (31, 41).
